# EUROPEAN PATENT SPECIFICATION

(11) **EP 2 852 145 B1**
(45) Date of publication and mention of the grant of the patent: **02.03.2022**
(21) Application number: 13185159.4
(22) Date of filing: 19.09.2013
(51) Int. Cl.: H04N 13/221, H04N 13/261

(54) **Provision of stereoscopic video camera views to aircraft passengers**
Bereitstellung von stereoskopischen Videokameraansichten an Flugzeugpassagiere
Fourniture de vues de caméra vidéo stéréoscopique aux passagers d'un avion

(43) Date of publication of application: 25.03.2015
(73) Proprietor: Airbus Operations GmbH, 21129 Hamburg (DE)
(72) Inventor: Coto-Lopez, Gerald, 21129 Hamburg (DE)
(74) Representative: Frenkel, Matthias Alexander

(56) References cited:
- WO-A1-99/37539
- WO-A1-2013/062557
- WO-A2-2006/064507
- JP-A- H0 937 300
- US-A1- 2005 278 753
- US-A1- 2010 020 160

## Description

The present disclosure generally relates to the provision of stereoscopy on board an aircraft. More particularly, the present disclosure relates a processing unit for providing stereoscopic video data on board an aircraft, to a system comprising the processing unit, to an aircraft comprising the system, to a method for providing stereoscopic video data on board an aircraft, as well as to a computer program for executing the method.

In modern aircraft, entertainment systems for providing in-flight entertainment and information to passengers of the aircraft are becoming increasingly important. These entertainment systems, which are normally referred to as In-Flight Entertainment (IFE) systems, provide information and entertainment (which may also be referred to together as infotainment) to aircraft passengers during all flight phases. Modern IFE systems provide different types of multimedia content, e.g. audio content and video content, to enhance the passenger experience. For this purpose, IFE systems generally comprise one or more servers, from which the different content like video content (e.g., movies, TV shows, video clips and the like), audio content, games, moving-map content and the like, can be accessed and retrieved on demand by the passengers. The demanded content is then typically provided to the passenger on different output devices, e.g. on cabin overhead video monitors, personal in-seat video monitors, headphones and similar output devices.

Currently, modern IFE systems may incorporate video feeds from external camera sources in order to provide passengers with external aircraft views on the cabin overhead video monitors or on the personal in-seat video monitors. Normally both a downward and a forward view from the aircraft are provided. Each of these views is derived from a monocular video camera in the so called Landscape Camera System. This provides a live video stream to the IFE system which makes a two-dimensional (2D) video stream viewable to each passenger on an individual monitor or to the cabin as a whole on wall-mounted, overhead monitors.

US 6,747,686 B1 refers to a high aspect stereoscopic mode camera and method. According to US 6,747,686 B1, an aerial reconnaissance camera and method provides for generating a first image of the terrain of interest with the camera pointing angle oriented or rotated about an azimuthal axis some angular amount θ1 to a first, typically forward, orientation, i.e., forward or cross-line of flight direction. An image is obtained of the ground at this orientation. Then the camera is rotated about the azimuthal axis to a new angular value θ2, which will typically be aft of the cross line of the flight direction. An image is generated at this value. The camera is then rotated back to the value of θ1, and a second image in the forward orientation is generated. The camera is then rotated again to the value of θ2 and another image in the aft direction is generated. This process of rotating the camera about the azimuthal axis and generating images in forward and aft orientations continues over and over. According to US 6,747,686 B1, by selection of suitable values of θ1 and θ2 the result will be pairs of images of the terrain of interest having a large baseline, producing high aspect stereo images from a single camera. However, as the camera has to rotate back and forth during flight in order to capture the images, the camera and method disclosed in US 6,747,686 only provides single stereoscopic images by means of a complex arrangement and time-consuming procedure.

US 4,807,024 relates to three-dimensional display methods and apparatus. According to US 4,807,024, three-dimensional images are generated by a single camera mounted on a platform moving at a constant velocity and spacing with respect to a subject to be imaged. Stereoscopically related images in the sequence are presented for viewing alternately at a rate of about ten per second so that the image seen by an observer is perceived as having depth. According to US 4,807,024, this perception of depth is achieved without the use of special glasses or other viewing aids. However, the skilled person is aware that the alternating display of images without the use of special glasses leads to blurry images rather than images with enhanced depth perception. Further, the skilled person is aware that a frame rate of about ten per second is not conducive to a flicker-free reproduction of images.

WO 2013/062557 A1 relates to a method and apparatus for processing a video data stream. The video data stream is received from a video camera system. The video data stream comprises a plurality of images of a scene. A plurality of image pairs is selected from the plurality of images. A first image of a first area in the scene overlaps a second image of a second area in the scene in each image pair in the plurality of image pairs. Each image pair in the plurality of image pairs is adjusted to form a plurality of adjusted image pairs. The plurality of adjusted image pairs is configured to provide a perception of depth for the scene when the plurality of adjusted image pairs is presented as a video.

WO 2006/064507 A2 relates to a vision system for a vehicle. The vision system includes at least one, and preferably a plurality of video image acquisition devices mounted on the vehicle for acquiring three-dimensional (3D) video images of at least one portion of the environment around the vehicle, a 3D goggles-free display mounted inside the vehicle, and means for displaying the acquired 3D images on the 3D display.

US 2010/020160 A1 relates to a stereoscopic motion picture sequence comprises a first channel of sequential images intended for viewing by one of a viewer's left and right eyes and a second channel of sequential images intended for viewing by the other one of the viewer's left and right eyes. Each image in each channel comprises primary image content representing a scene consisting of a plurality of elements and 'temporal shadow' image content.

WO 99/37539 A1 relates to an improved landscape camera system (10) for use in aircraft, which utilizes digital video technology to obtain multiple fields of view that are selectable for viewing by passengers on the aircraft, from either a single video frame or from multiple cameras with different fields of view. The camera module (14) can also receive video input from one or more auxiliary video cameras, such as a vertical fin mounted video camera, i.e. directed forward for a view of the aircraft in flight, or a rearward looking belly mounted camera.

Accordingly, there is a demand to provide external aircraft views to the passengers in a realistic manner.

According to a first aspect, a processing unit for providing stereoscopic video data on board an aircraft is provided according to claim 1.

Stereoscopics (which may also be referred to as stereoscopy or stereoscopic imaging) is usually understood as a technique for creating or enhancing the illusion of depth in an image or video by means of stereopsis for binocular vision. Sometimes, stereoscopic imaging is called three-dimensional (3D) imaging or simply 3D. Some stereoscopic methods present two offset images separately to the left and right eye of the viewer. These 2D images are then combined in the brain to give the perception of 3D depth. In other words, stereoscopy may create the illusion of 3D depth from given 2D images. Stereoscopy may be regarded as the production of the illusion of depth in a photograph, movie, or other 2D image by presenting a slightly different image to each eye. Both of such 2D offset images may then be combined in the brain to give the perception of 3D depth. Although the term "3D" is ubiquitously used, the presentation of dual 2D images is usually different from displaying an image in three full dimensions. Although most stereoscopic displays do not qualify as real 3D displays, all real 3D displays are also stereoscopic displays because they meet the lower criteria (of stereoscopy) as well. Most 3D displays use a stereoscopic method to convey images.

In this respect, stereoscopic video data may also be referred to as pseudo-3D video data. Likewise, a stereoscopic video image may be referred to as a pseudo-3D video image. In consequence, a stereoscopic video image may be created by presenting a slightly different video image to each eye. For example, a stereoscopic video image may be created by presenting a first video image of an object taken from a first angle and a second video image of the same object taken from a second angle (slightly) different from the first angle. To give another example, in case of a moving object, a stereoscopic video image may be created by presenting a first video image of the object taken at a first point of time (and thus from a first angle) and a second video image of the same object taken at a second point of time (and thus from a second angle different from the first angle). In order to form a stereoscopic video image, the first video image and the second video image (independent of the exact generation of said first and second video images) may be suitably combined. For example, the first and second video images may be displayed simultaneously, one video image to each eye, to form the stereoscopic video image. Alternatively, the first video image and the second video image may be overlapped with each other to form the stereoscopic video image. Independent of the specific combination of the first and second video image, a suitable device or a suitable means may be provided to the observer to decode the stereoscopic video image appropriately for each eye.

The one or more views external to the aircraft (which may also be referred to as one or more external views, as one or more external aircraft views or just as one or more views) may be or comprise any view of a scene, landscape, terrain, region or environment external to the aircraft. The one more views may be or comprise any view from the aircraft on such scene, landscape, terrain, region or environment (located) outside the aircraft during taxi and/or any flight phase, e.g., during take-off, departure and climb, cruise flight, descent and approach, and landing. The one or more video images may form a video representation of the external view. The one or more views external to the aircraft may be or comprise views on the ground from different locations or positions on the aircraft. For example, the one or more views external to the aircraft may be or comprise at least one of one or more forward views and one or more downward views, e.g., one or more first views may be or comprise one or more forward views and one or more second views may be or comprise one or more downward views. For each of said views, e.g., for the forward view(s) and/or the downward view(s), video images may be captured and forwarded to the processing unit. Further, for each of said views, the processing unit may be configured to form stereoscopic video data related to the respective view(s), e.g., the processing unit may be configured to form stereoscopic video data related to the forward view(s) and/or to form stereoscopic video data related to the downward view(s).

At least one of the first and second video data represents video images captured outside the aircraft. The video images may be regarded as real video images taken or captured by means of at least one video camera. Such captured video images may also be referred to as captured video images. The video data representing the video images may be provided in near real time (leaving aside the normal runtime of signals) to the processing unit. The processing unit may then process the video data representing the video images in near real time (leaving aside the normal processing time of data) to form stereoscopic video data representing stereoscopic video images. The processing unit may then forward in near real time (leaving aside the normal runtime of signals) the stereoscopic video data to one or more display devices so that the one or more stereoscopic video images may be presented to the passengers of the aircraft in near real time.

The processing component of the processing unit may be configured to combine at least a part of the first video data and the second video data to form the stereoscopic video data. In this case, the processing component may be configured to overlap at least a part of the video images or frames of the first video data with at least a part of the video images or frames of the second video data.

According to a first possible implementation useful for understanding the processing unit according to the first aspect, both the first video data and the second video data may represent video images captured by at least two external video cameras. By positioning the at least two cameras with a predefined separation (predetermined distance) the video images may be captured from different viewing angles. For example, the at least two video cameras may be positioned and arranged on the aircraft structure in order to generate the first and second video data for each external view in a certain direction. The first video data may be generated by a first of the at least two video cameras and the second video data may be generated by a second of the at least two video cameras. Both video cameras may forward the generated video data to the processing unit. The processing component may be configured to combine at least a part of the first and second video data to form the stereoscopic video data. For example, at least a part of the video images represented by the first and second video data may be suitably overlapped. For example, corresponding frames of the first and second video data may be suitably overlapped. The corresponding frames may be the frames or video images which have been captured by the at least two cameras at least almost simultaneously. In this way, for example, two video images of the same object, taken from slightly different angles, may be simultaneously presented, one to each eye, as a stereoscopic video image.

The first video data represent video images captured by a single external video camera. The first video data are generated by the single video camera, e.g., only the first video data may be generated by the single video camera. The single video camera may be positioned and arranged on the aircraft structure in order to generate the first video data representing the one or more video images. The single video camera may forward the first video data to the processing unit in near real time. For each external view, one single video camera may be provided. The processing unit further comprises a generating component configured to generate the second video data from the first video data. The generating component is configured to generate the second video data by duplicating the first video data. Further, the generating component is configured to generate the second video data by delaying or retarding the duplicated first video data by a preconfigured and/or determined delay time. The delay time may be adjustable or variable. The delay time may be one or more milliseconds or one or more seconds. For instance, the delay time may be any value from 0.01 to 5 seconds, e.g., any value between 0.5 and 1.5 seconds. The delay may be adjusted by the aircraft crew and/or the passengers, e.g., by each passenger individually depending on his/her preferences. The delay time, e.g., as specified by a duration parameter giving the time of which the video stream is delayed, can be used to adjust the stereo depth of the combined pseudo-3D video images. For instance, the higher the delay, usually, the bigger the stereo depth. In order to enable the passengers to individually adjust the delay time and thus the desired stereo depth, a respective input unit for each passenger, e.g., in the passengers' seats, or a respective processing unit as described herein may be provided for each passenger, e.g., in the passengers' seats.

The processing unit is configured to determine the delay time (which may also be referred to simply as delay) based on at least one of the velocity of the aircraft over ground, the altitude of the aircraft above ground, delay information input by one or more passengers of the aircraft and delay information input by aircraft personnel. Likewise, the processing unit may be configured to adjust the preconfigured or determined delay repetitively, e.g., continuously, based on at least one of the velocity of the aircraft over ground, the altitude of the aircraft above ground, the delay information input by one or more passengers of the aircraft and the delay information input by aircraft personnel. For example, the higher the velocity of the aircraft, the smaller the delay may be chosen by the processing unit. As another example, the higher the altitude of the aircraft, the bigger the delay may be chosen by the processing unit.

The processing component may be configured to process, e.g., to combine, at least a part of the first video data and second video data by overlapping frames of the first video data with frames of the second video data. The overlapping frames of the first and second video data may be offset in accordance with the delay time. For example, the offset between the overlapping or overlapped frames of the first and second video data may correspond to the delay time, e.g., the adjustable delay time.

Independent of the exact implementation of the processing unit, the processing unit may comprise a receiving component. The receiving component may be configured to receive at least one of the first and second video data, e.g., from the one or more video cameras arranged on the aircraft. The receiving component may then indirectly or directly forward the received video data to other components within the processing unit, e.g., to the processing component. The receiving component may comprise one or more interfaces to respective devices. In order to receive at least one of the first and second video data, one or more interfaces to respective video cameras may be provided.

The receiving component may further be configured to receive at least one of the velocity of the aircraft over ground and the altitude of the aircraft above ground as mentioned above. The velocity of the aircraft and the altitude of the aircraft may be summarized under the term navigation data. The navigation data may thus comprise at least one of the velocity of the aircraft and the altitude of the aircraft. Alternatively or additionally, the receiving component may be configured to receive delay information comprising at least one of the delay information input by one or more passengers of the aircraft and the delay information input by aircraft personnel as mentioned above. The processing component may be configured to determine the delay based on the received navigation data and/or delay information.

The receiving component may have one or more separate interfaces to receive the navigation data and/or the delay information or may use the same interface(s) which is/are used for receiving at least one of the first and second video data.

The navigation data may be derived from a navigation system onboard the aircraft and may comprise the actual speed and/or the actual altitude of the aircraft. In other words, the navigation data may be derived by considering information provided by the onboard navigation system. The navigation data may be provided in near real time (leaving aside the normal runtime of signals) to the processing unit and may be processed in near real time (leaving aside the normal processing time of data) in the processing unit. The processing component of the processing unit may be configured to selectively delay the first video data by using the navigation data and/or the delay information in order to generate the second video data. All of the aforementioned data, i.e. the first and second video data, the navigation data and the delay information may be received at different ports or interfaces of the receiving component.

Independent of the exact implementation of the processing component, the forwarding component may be configured to forward at least one of the first and second video data to one or more display devices provided on board the aircraft (onboard display devices) for presentation to passengers of the aircraft. The forwarding component may further be configured to forward at least one of the first and second video data in addition to or alternatively to the stereoscopic video data. It is conceivable that a passenger can select or request whether to receive 2D video data, in which case one of the first and second video data can be forwarded by the forwarding component to the requesting passenger, or whether to receive 3D video data, in which case the stereoscopic video data can be forwarded by the forwarding component to the requesting passenger. For this purpose, the processing unit may comprise a selecting component configured to select 2D or 3D representation. Depending on the passenger input received at the selecting unit, 2D video data and/or 3D video data may be forwarded to the display device(s) and thus 2D video images and/or 3D video images may be presented on the display device(s).

The one or more display devices may be configured as cabin overhead video monitors (e.g., as wall-mounted overhead monitors). Alternatively or additionally, the one or more display devices may be individual monitors provided at the passengers' seats (e.g., personal in-seat video monitors). The first and second video data representing the (captured) video images may be processed by the processing component to generate stereoscopic video data, wherein said stereoscopic video data is adapted such that one or more stereoscopic video images are presentable on the onboard display devices provided on board the aircraft such as cabin overhead video monitors and/or personal in-seat video monitors. The processed stereoscopic video data may be retrievable on demand in response to a user request such as a passenger input. In order to provide the stereoscopic video images to the passengers of the aircraft, the forwarding component may be configured to forward the stereoscopic video data to at least one of the plurality of display devices provided on board the aircraft in response to the user request.

The processing unit may be provided centrally in a common unit or may be provided in a decentralized manner. For example, the processing unit may be arranged within a central unit, e.g., in a common unit of the IFE system head-end. As another example, at least some functions of the processing unit may be arranged for each passenger, e.g., in a decentralized processing unit within the passenger seat(s).

The first and second video data may be structured or organized in a video feed or a video stream. The stereoscopic video data may be structured or organized in a stereoscopic video feed or a stereoscopic video stream. The respective video feeds/streams may then be input into the processing unit to be processed by the processing unit in order to be retrievable on demand. Generally, a data feed may be regarded as a mechanism for users to receive updated data from data sources. Data feeds are commonly used by real-time applications in point-to-point settings as well as on the World Wide Web. In the present scenario, the video feeds may be regarded as a mechanism for the passengers of the aircraft to receive updated video data, i.e. updated stereoscopic video data.

According to a second aspect, a system for providing stereoscopic video data on board an aircraft according to claim 4 is provided.

In order to realize the first possible implementation useful for understanding the processing unit as mentioned above, at least two video cameras may be arranged on the aircraft. For example, two video cameras may be arranged as a first pair of video cameras in order to capture video images of a first pair of external views, e.g., a pair of forward views, and two video cameras may be arranged as a second pair of video cameras in order to capture video images of a second pair of external views, e.g., a pair of downward views. A first video camera of the first pair of video cameras (i.e., the pair of forward-looking video cameras) may generate the first video data of the first pair of views, e.g., the pair of forward views, and a second video camera of the first pair of cameras (i.e., the pair of forward-looking video cameras) may generate the second video data of the first pair of views, e.g., the pair of forward views. Alternatively or additionally, a first video camera of the second pair of video cameras (i.e., the pair of downward-looking video cameras) may generate the first video data of the second pair of views, e.g., the pair of downward views, and a second video camera of the second pair of video cameras (i.e., the pair of downward-looking video cameras) may generate the second video data of the second pair of views, e.g., the pair of downward views. The video cameras of the pair of forward-looking cameras may be identical with a defined separation between the two. The video cameras of the pair of downward-looking cameras may be identical with a defined separation between the two.

In order to realize the second possible implementation of the processing unit as mentioned above, at least one video camera may be arranged on the aircraft for each of the one or more views. For example, one video camera may be arranged as a first video camera in order to capture video images of a first external view, e.g., a forward view, and one video camera may be arranged as a second camera in order to capture video images of a second external view, e.g., a downward view. The first video camera may generate the first video data of the first view, e.g., the forward view, and the second video data of the first view, e.g., the forward view, may be generated by the processing unit as set forth above. Alternatively or additionally, the second video camera may generate the first video data of the second view, e.g., the downward view, and the second video data of the second view, e.g., the downward view, may be generated by the processing unit as set forth above.

The system may further comprise one or more display devices (passenger or onboard display devices) coupled to the processing unit, e.g., to the forwarding component, via at least one of a wired and a wireless connection such that the stereoscopic video data is retrievable on demand to display video images on at least one of the one or more display devices. The wired connection may be configured as or may comprise a data bus. In case of a data bus connection, each of the plurality of passenger or onboard display devices may be coupled to the processing unit via the data bus such that the stereoscopic video data is retrievable on demand over the data bus to display the stereoscopic video images on at least one of the passenger or onboard display devices. For example, the stereoscopic video images may be displayed on the passenger display device on which a user request requesting the processed stereoscopic video data was input. Alternatively or additionally, at least one of the first and second video data may be retrievable on demand over the data bus to display the video images in 2D.

The passenger or onboard display devices may be integrated into the seats of the aircraft and may thus be configured as in-seat display devices. Alternatively, the passenger or onboard display devices may be configured as or may be displays of passengers' mobile terminals, e.g. mobile phones, smartphones, tablet computers or the like. In this respect, an application (in short: app) may be downloaded by passengers on their mobile terminals and then executed on the mobile terminals. When running, the app may retrieve the processed stereoscopic video data from the processing unit and may then instruct the display of the mobile terminal (on which it is running) to display the stereoscopic video images. Additionally or alternatively, at least one of the first and second video data may be retrieved by the mobile terminal from the processing unit to display the corresponding information, i.e. the one or more video images from outside the aircraft in 2D.

The system may further comprise a plurality of passenger glasses, e.g., shutter glasses or polarization glasses. The passenger glasses may be used by the passengers in order to watch the video images in 3D. In case of shutter glasses, each of the plurality of passenger glasses may be coupled to the data bus such that the passenger glasses can be synchronized with the stereoscopic video data.

The system may comprise or may be configured as an In-Flight Entertainment (IFE) system. For example, the processing unit may be configured as or may comprise a server of the IFE system, i.e. an IFE server.

According to a third aspect, an aircraft comprising the system as described in claim 7 is provided.

According to a fourth aspect, a method for providing stereoscopic video data on board an aircraft is provided. The method is defined by claim 8.

According to a fifth aspect, a computer program product according to claim 9 is provided. The computer program product comprises program code portions for carrying out one or more of the steps of any one of the method aspects described herein, when the computer program product is run or executed on a computer system or on one or more computing devices (e.g., a microprocessor, a microcontroller or a digital signal processor (DSP)). The computer program product may be stored on a computer-readable recording medium, such as a permanent or rewritable memory.

All of the above described aspects may be implemented by hardware circuitry and/or by software.

Even if some of the above aspects are described herein with respect to the processing unit or the system comprising the processing unit, these aspects may also be implemented as a method or as a computer program for performing or executing the method. Likewise, aspects described as or with reference to a method may be realized by suitable units in the processing unit, the system comprising the processing unit or by means of the computer program.

In the following, the present disclosure will further be described with reference to exemplary embodiments illustrated in the figures, in which:
- Figure 1: schematically illustrates a first device embodiment of a processing unit for providing stereoscopic video data to passengers;
- Figure 2: schematically illustrates a first system embodiment comprising the first device embodiment of figure 1;
- Figure 3: schematically illustrates a flowchart of a first method embodiment which can be performed in the first system embodiment of figure 2;
- Figure 4: schematically illustrates a second device embodiment of a processing unit for providing stereoscopic video data to passengers;
- Figure 5: schematically illustrates a second system embodiment comprising the second device embodiment of figure 4; and
- Figure 6: schematically illustrates a flowchart of a second method embodiment which can be performed in the second system embodiment of figure 5.

In the following description, for purposes of explanation and not limitation, specific details are set forth in order to provide a thorough understanding of the present disclosure. It will be apparent to one skilled in the art that the present disclosure may be practiced in other embodiments that depart from these specific details. For example, the skilled person will appreciate that the present disclosure may be practiced with video data which are not structured in video streams, respectively, discussed below to illustrate the present disclosure. Even if in the below the present disclosure is described only with respect to a single processing unit, the disclosure may equally be practiced in an environment having multiple processing units, e.g., one processing unit for each passenger seat or the like.

Those skilled in the art will further appreciate that functions explained hereinbelow may be implemented using individual hardware circuitry, using software functioning in conjunction with a programmed microprocessor or a general purpose computer, using an application specific integrated circuit (ASIC) and/or using one or more digital signal processors (DSPs). It will also be appreciated that when the present disclosure is described as a method, it may also be embodied in a device (i.e., the processing unit and the system comprising the processing unit described below), a computer processor and a memory coupled to a processor, wherein the memory is encoded with one or more programs that perform the methods disclosed herein when executed by the processor.

Further, although the embodiments are described below with respect to a passenger display device configured as an in-seat video monitor, the disclosure is not limited thereto, but the passenger display device may equally also be configured as a display of a mobile terminal, e.g. a mobile phone, a smartphone, a tablet computer or the like, using which the respective user of the mobile terminal can retrieve the passenger information he/she is interested in from the processing unit by means of an application (in short: app) running on the mobile terminal. According to this alternative, each passenger may use his/her own mobile terminal to access the information he/she is interested in. However, the basic principles described below regarding the processing of the video streams and the retrieval of the video streams equally apply to this alternative.

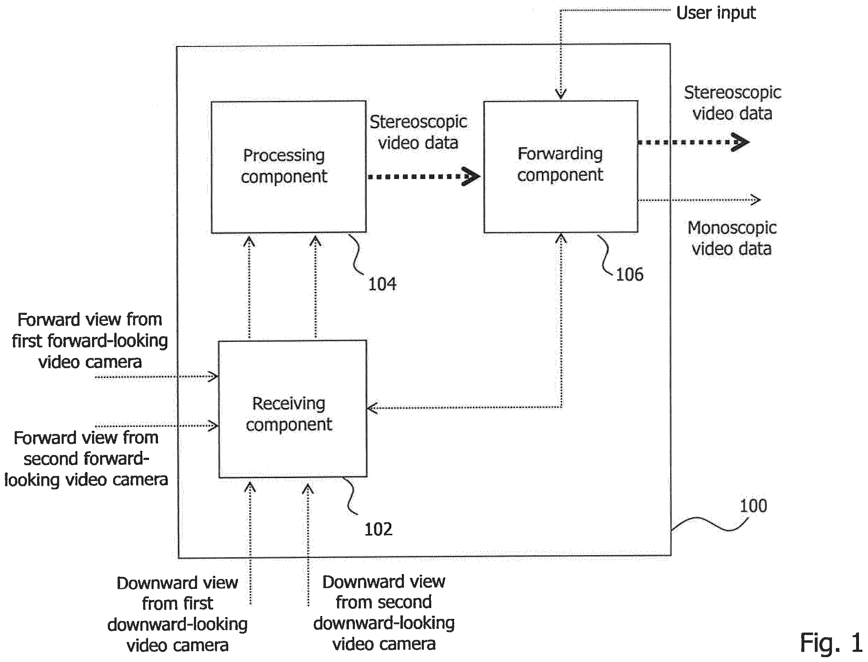

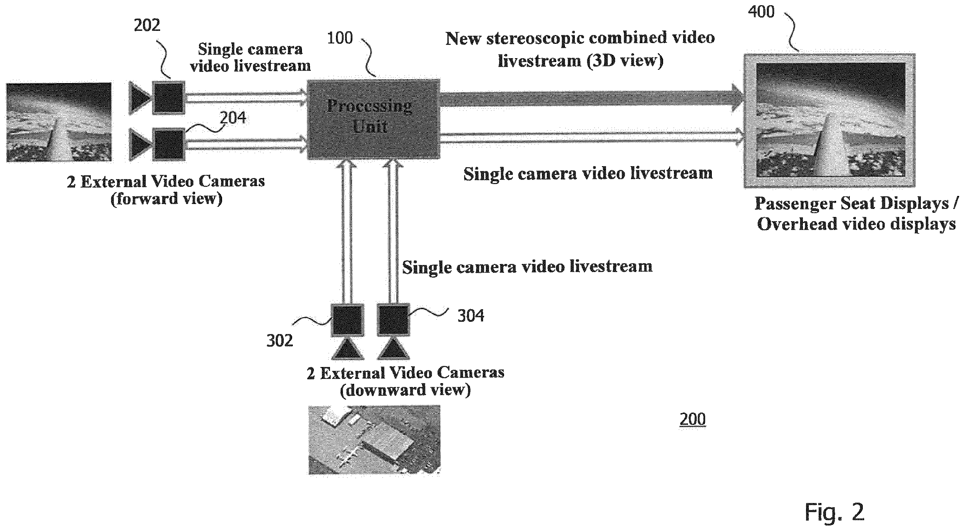

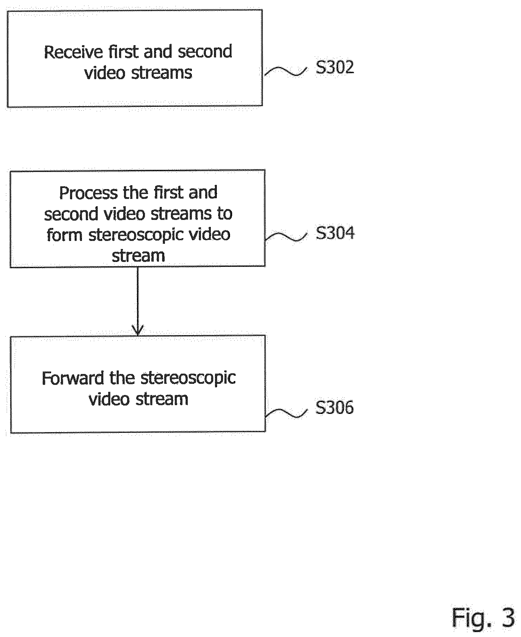

Figure 1 schematically illustrates a first device embodiment of a processing unit 100 for providing stereoscopic video data organized in one or more stereoscopic video streams to passengers of an aircraft. In the present embodiment, the processing unit 100 is by way of example configured as a processing unit 100 of an In-Flight Entertainment (IFE) system 200 provided onboard an aircraft (see figure 2). The processing unit 100 may be part of or configured as an IFE server. The processing unit 100 comprises a receiving component 102, a processing component 104 and a forwarding component 106. The basic operation of the processing unit 100 and the IFE system 200 comprising the processing unit 100 will be described with reference to Figs. 1 to 3 as follows.

The receiving component 102 is configured to receive in step S302 first and second video streams comprising video images of views external to the aircraft. The first and second video streams may be live video streams in a digital format provided by two external forward-looking video cameras 202, 204. The two forward-looking video cameras 202, 204 may be positioned on the aircraft structure with a defined separation between the two. Alternatively or additionally, the first and second video streams may be live video streams in a digital format provided by two external downward-looking video cameras 302, 304. The two downward-looking video cameras 302, 304 may be positioned on the aircraft structure with a defined separation between the two. In this example, it is, for explanation rather than limitation, assumed that two video streams are provided by both the forward- and the downward-looking video cameras, respectively.

If a passenger of the aircraft intends to be provided with video views from outside the aircraft rather than to watch a movie or listen to music provided by the IFE system 200, the IFE system 200 allows the passenger to selectively retrieve one or more of the video streams received at the receiving component 102 and/or generated in the processing component 104. In accordance therewith, the user selects on an input unit, e.g. the video monitor of display device 400, which video view he/she wishes to receive, namely, in the present example, one of the forward and downward video views. For sake of explanation rather than limitation it is assumed by way of example that the passenger performs a user input indicating that he/she wishes to receive a forward video view. Further, the passenger can select whether to receive the video view, in the present example the forward video view, in 2D or 3D. In response to the user input, a user request is transmitted from the input unit, e.g. the video monitor of the display device 400, to the processing unit 100, for example, to the forwarding component 106.

Depending on the user input, the forward component 106 instructs the receiving component 102 to forward the first and second video streams of the forward video view and/or the first and second video streams of the downward video to the processing component. In the present example, the receiving component 102 only forwards the first and second video streams of the forward view in accordance with the user input. The processing component 104 is configured to process, for example, to combine, in step S304 at least a part of the received first and second video streams to form a stereoscopic video stream. This step may be omitted if the user intends to receive the forward view in 2D only.

If it was input by the passenger to receive the forward view in 3D, however, the stereoscopic video stream is formed and forwarded to the forwarding component 106, which then forwards the stereoscopic video stream of the forward view to the one or more display devices in step S306. For example, the stereoscopic video stream is forwarded to the passenger display device 400 on which the user input was input or received.

It is also conceivable that, independent of the user input, the stereoscopic video stream is forwarded together with at least one of the first and second video streams to the display device 400 by the forwarding component 106. The foregoing concept is illustrated in figure 2, by way of example. According to this example, if the passenger intends to watch the forward view in 2D, as at least one of the first and second video streams is forwarded to the passenger display device 400, the passenger can watch a monocular forward view in real time. As also the stereoscopic video stream is forwarded to the passenger display device 400 according to the example shown in figure 2, the passenger can also switch in real time to the 3D view of the stereoscopic video stream and vice versa to the 2D view. Thus, as shown in figures 1 and 2, the stereoscopic video stream can be forwarded along with one of the original video camera output streams to the passenger display device 400. That is, depending on the user input, external 2D video images and/or external 3D video images can be displayed on the display device(s). In other words, the provision of both streams (2D and 3D) to the passenger(s) permits the user to select either the normal monoscopic (landscape) view or the stereoscopic (landscape) view with its enhanced depth and detail perception. If the (landscape) video streams are to be presented on the overhead video monitor(s) for public viewing within the aircraft cabin, then the cabin crew can select whether either the monocular or the binocular view is presented.

The processing unit 100 may be located within the IFE head-end to enable streaming of the stereoscopic and/or monoscopic video streams to all monitors. This may save processing capabilities and energy. Alternatively or additionally, the processing unit 100 may be located within an IFE system Line Replaceable Unit located within one or more of the passenger seats. Alternatively or additionally, the processing unit 100 may be installed within the display devices of the IFE system 200 themselves. In the latter two cases, each passenger can easily select in real time and individually which streams he/she wants to receive. In the first case, individual supply of the requested stream may involve more processing time, but may save power.

By way of the IFE system 200 described above, known IFE systems can be extended by 3D video view functionalities which bring the joy of flying closer to the flying passenger. The functionalities make use of video streams from outside the aircraft. For this purpose, at least two video cameras 202, 204; 302, 304 are arranged outside the aircraft for each of the forward and upward views.

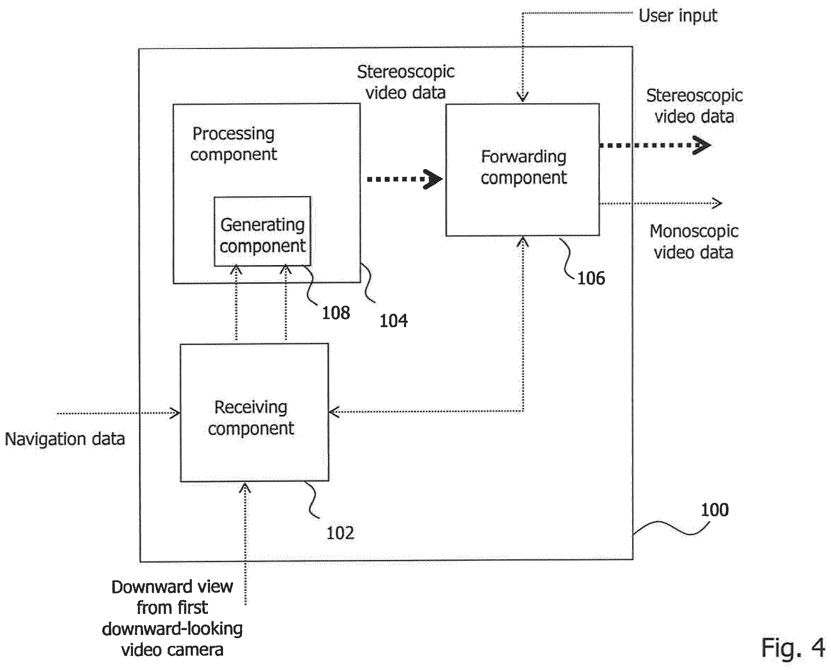

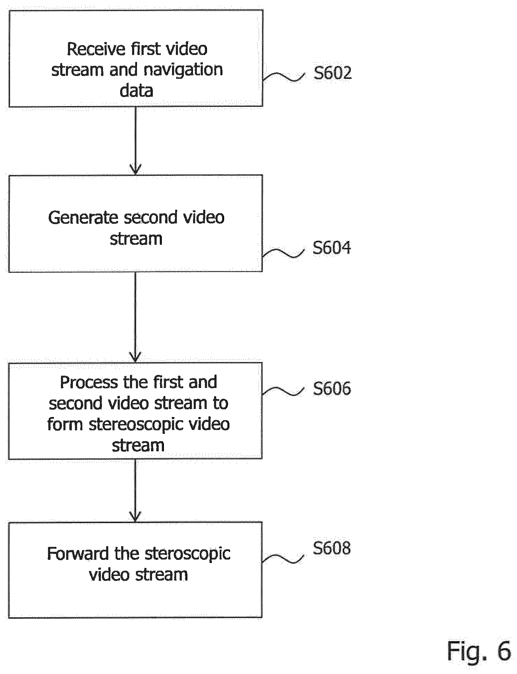

Fig. 4 schematically illustrates a second embodiment of a processing unit 100 for providing stereoscopic video data organized in one or more stereoscopic video streams to passengers of an aircraft. In the present embodiment, the processing unit 100 is by way of example configured as a processing unit 100 of an IFE system 500 provided onboard the aircraft. The processing unit 100 may be part of or configured as an IFE server. The processing unit 100 comprises a receiving component 102, a processing component 104 and a forwarding component 106. The processing component further comprises a generating component 108. The generating component 108 is the main difference between the processing unit 100 according to the second embodiment and the processing unit 100 according to the first embodiment. The receiving component 102, the forwarding component 106 and the rest of the processing component 104 of the processing unit 100 according to the first and second embodiments mainly correspond in functionality to each other. However, the IFE system 200 according to the first system embodiment and the IFE system 500 according to the second system embodiment differ from each other in the number of video cameras provided. While the IFE system 200 according to the first system embodiment comprises four video cameras 202, 204; 302, 304 (two for the forward view and two for the downward view), the IFE system 500 only exemplarily comprises one single camera 302 for the downward view. The number of cameras in the first and second system embodiments is, however, to be understood as merely exemplary and, for example, the IFE system 200 may only comprise two video cameras (either two for the downward view or two for the forward view), while the IFE system 500 may comprises two video cameras (one for the downward view and one for the forward view) or the like. The basic operation of the processing unit 100 and the IFE system 500 will be described with reference to figures 4 to 6 as follows.

The receiving component 102 is configured to receive, in step S602, navigation data and a first (landscape) video stream representing video images of a view external to the aircraft. The first video stream is, by way of example, provided by one single downward-looking video camera 302. Alternatively or additionally, the first video stream may be a (landscape) video stream provided by one single forward-looking video camera. In this example, it is for explanation rather than limitation assumed that a single (first) video stream is provided by a single downward-looking video camera 302 only.

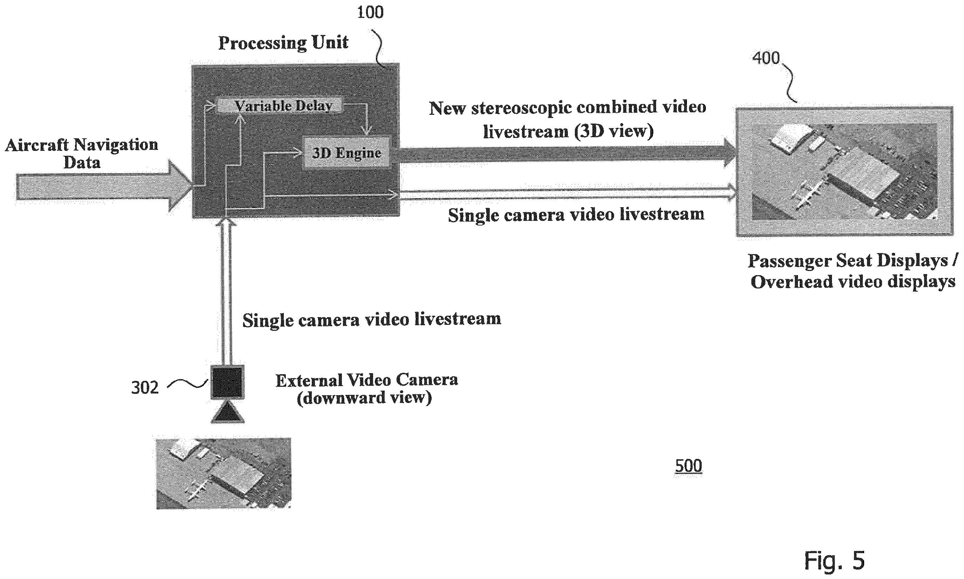

As exemplarily assumed, the receiving component 102 receives, in step S602, a first video stream comprising video images of the downward view and navigation data and forwards the first video stream and the navigation data to the processing component 104. The navigation data exemplarily comprises information about the velocity of the aircraft over ground and the altitude of the aircraft above ground. The generating component 108 is configured to generate a second video stream from the first video stream in step S604. For this purpose, as shown in more detail in figure 5, the first video stream is split into two (i.e., is duplicated) in the processing unit 100.

In the examples of Figs. 4 and 5, the generating component 108 delays the duplicated video stream by a certain adjustable (variable) delay time to generate the second video stream. The delay time may be an internal digital delay of varying length. The delay time is derived from the navigation data received by the receiving component 102 and forwarded to the generating component 108. For example, the processing component 104 may derive a smaller value for the delay, the higher the velocity of the aircraft. This is because with a higher velocity (and at constant altitude) the aircraft needs a shorter time to cover a certain distance, e.g., to traverse the stereoscopic baseline. The stereoscopic baseline is the angular separation between the two views of the landscape. On the other hand, the processing component 104 may derive a higher value for the delay time, the higher the altitude of the aircraft. This is because at higher altitude (and at a constant aircraft velocity) the aircraft needs a longer time to cover a certain distance, e.g., to traverse the stereoscopic baseline.

In more detail, one of the two video streams (in the present example, the duplicated video stream) is stored temporarily in a buffer which may be implemented as a First-In-First-Out (FIFO) digital delay of variable length or size. The video stream is present in the buffer for a variable length of time (the variable delay time) that is determined by an algorithm within the processing unit 100. The parameters used to determine the duration of the delay are the aircraft's velocity (e.g., its "True Speed over land") and the aircraft's altitude (e.g., its "altitude over land"). These parameters are provided as digital information to the processing unit 100 from the aircraft's navigation system. When assuming by way of example that an aircraft is cruising at a speed of 800 knots at 35,000 feet above ground, an optimal delay time for satisfactory stereoscopic image depth may be in the order of 0.5 to 1.3 seconds. After the variable delay time of 1 second, for example, the delayed stream exits the delay buffer of the processing component 104 and is fed together with the nondelayed first video stream into the 3D engine of the processing component 104 in order to form the pseudo-3D images (for the overlapping parts of the two input streams). In other words, the processing component 104 is configured to process, for example, to combine, in step S606 the overlapping parts of the received first video stream and the generated second video stream to form a stereoscopic video stream.

The duration parameter giving the time of which the video stream is delayed can be used to adjust the stereo depth of the combined pseudo-3D video stream. For instance, the higher the delay time, usually, the bigger the stereo depth. This is because the higher the delay time, the larger the spatial differences between information given in respective (or corresponding) frames or video images of the first and second video streams. Further, the larger the spatial differences between information given in respective (or corresponding) frames or video images, the higher the stereo depth. It is also conceivable that the delay can be adjusted by the aircraft crew or the passengers, e.g., by each passenger individually depending on his/her preferences. In this way, stereoscopic video images can be formed with variable stereo depth dependent on the determined delay time or input delay information.

If a passenger of the aircraft intends to be provided with video views from outside the aircraft rather than to watch a movie or listen to music provided by the IFE system 500, the IFE system 500 allows the passenger to selectively retrieve one or more of the video streams received at the receiving component 102 and/or generated in the processing component 104. In accordance therewith, the user selects on an input unit, e.g. the video monitor of the display device 400, which video view he/she wishes to receive, namely, in the present example, a video of the downward view. Further, the passenger can select whether to receive the video view, in the present example, the downward video view, in 2D or 3D. In response to the user input, a user request is transmitted from the input unit, e.g. the video monitor of the display device 400, to the processing unit 100, for example, to the forwarding component 106.

Depending on the user input the forwarding component 106 then instructs the receiving component 102 to forward the video stream of the forward video view and/or the video stream of the downward video to the processing component. In the present example, the receiving component only forwards the video stream of the downward view in accordance with the user input.

The step of forming the 3D stream may be omitted if the user intends to receive the forward view in 2D. If it was input by the passenger to receive the downward view in 3D, however, the stereoscopic video stream is formed and forwarded to the forwarding component 106, which then forwards the stereoscopic video stream of the downward view to the display device 400.

In the example shown in figure 5, the stereoscopic video stream is formed independent of the user input. Further, independent of the user input, the stereoscopic video stream and at least one of the first and second video streams is forwarded to the display device in step S608. For example, the stereoscopic video stream and the first and/or second video stream are forwarded to the passenger display device 400 on which the user input was input or received. If the passenger intends to watch the downward view in 2D, one of the first and second video streams can be presented in real time as at least one of them is forwarded to the passenger display device 400 to provide a monocular downward view. If the passenger prefers to watch the 3D downward view, the stereoscopic video stream can be presented in real time as it is also forwarded to the display device 400. That is, depending on the user input, external 2D video images or external 3D video images can be displayed in real time on the display device(s). As detailed above, the pseudo-3D digital video stream is transmitted by the processing unit 100 to one or more display devices and is thereby presented onto the passenger displays (individual or cabin overhead monitors for public viewing) and viewed by suitable means or devices, e.g., shutter glasses.

By way of the IFE system 500 described above, known IFE systems can be extended by 3D video view functionalities which bring the joy of flying closer to the flying passenger. The functionalities make use of one or more video streams from outside the aircraft. For this purpose, it is sufficient to arrange one single video camera 302 outside the aircraft for each external view.

The processing unit 100 may continuously receive and process the video stream(s) and, if provided, the navigation data, and in this way may update the video views available from the IFE system 200, 500. Thus, in principle, updated video views are always retrievable from the processing unit 100. When the processing unit 100 determines that it has received a user request, it may forward the requested data to the seat associated with the video monitor on which the user request was made.

Within the processing unit 100 incoming information is processed to provide 3D external views on the onboard display device(s). As described above, the IFE system 200, 500 may be configured to make external views available to the passengers as an interactive on-demand 3D service.

## Claims

1. A processing unit (100) for providing stereoscopic video data on board an aircraft, wherein the processing unit (100) comprises:
- a processing component (104) configured to process at least a part of first video data and second video data to form stereoscopic video data, wherein the first and the second video data represent video images of one or more views external to the aircraft; and
- a forwarding component (106) configured to forward the formed stereoscopic video data to one or more display devices (400) provided on board the aircraft for presentation to passengers of the aircraft,
wherein the first video data represent video images captured by a single external video camera (202; 302) for each of the one or more views and the processing unit (100) further comprises a generating component (108) configured to generate the second video data from the first video data,
**characterized in that** the generating component (108) is configured to generate the second video data by duplicating the first video data and by delaying or retarding the duplicated first video data by a preconfigured and/or determined delay time, and wherein the processing unit (100) is configured to determine the delay time based on at least one of delay information input by one or more passengers of the aircraft and delay information input by aircraft personnel,
wherein the forwarding component (106) is configured to forward at least one of the first and second video data to the one or more display devices (400) provided on board the aircraft for presentation to passengers of the aircraft, and
wherein the forwarding component (106) is configured to forward only the first video data or only the second video data or both the first and second video data based on an input by the one or more passengers of the aircraft.

2. The processing unit (100) of claim 1, wherein the processing component (104) is configured to combine at least a part of the first video data and second video data by overlapping frames of the first video data with frames of the second video data, wherein the overlapping frames of the first and second video data are offset in accordance with the delay time.

3. The processing unit (100) of claim 1 or 2, wherein the first and second video data are structured or organized in a video feed or a video stream, and the stereoscopic video data are structured or organized in a stereoscopic video feed or a stereoscopic video stream.

4. A system (200; 500) for providing stereoscopic video data on board an aircraft, wherein the system (200; 500) comprises:
- at least one video camera (202, 204; 302, 304) configured to generate at least first video data representing video images of one or more views external to the aircraft; and
- the processing unit (100) according to any one of claims 1 to 3.

5. The system (200; 500) of claim 4, wherein the system (200; 500) further comprises one or more display devices (400) coupled to the processing unit (100) via at least one of a wired and a wireless connection such that the stereoscopic video data is retrievable on demand to display stereoscopic video images represented by the stereoscopic video data on at least one of the one or more display devices (400).

6. The system (200; 500) of claim 4 or 5, wherein the system comprises or is configured as an In-Flight Entertainment, IFE, system.

7. An aircraft comprising the system (200; 500) of any one of claims 4 to 6, wherein the at least one video camera (202, 204; 302, 304) is arranged on the aircraft structure as at least one of a downward-looking video camera and a forward-looking video camera.

8. A method for providing stereoscopic video data on board an aircraft, wherein the method comprises:
- processing (S304; S606) at least a part of first video data and second video data to form stereoscopic video data, wherein the first and the second video data represent video images of one or more views external to the aircraft; and
- forwarding (S306; S608) the formed stereoscopic video data to one or more display devices provided on board the aircraft for presentation to passengers of the aircraft,
wherein the first video data represent video images captured by a single external video camera (202; 302) for each of the one or more views and the method further comprises generating the second video data from the first video data,
**characterized by** generating the second video data by duplicating the first video data and by delaying or retarding the duplicated first video data by a preconfigured and/or determined delay time, and wherein the method comprises determining the delay time based on at least one of delay information input by one or more passengers of the aircraft and delay information input by aircraft personnel,
wherein the forwarding (S306; S308) further comprises forwarding at least one of the first and second video data to the one or more display devices provided on board the aircraft for presentation to passengers of the aircraft, and
wherein the forwarding (S306; S308) further comprises forwarding only the first video data or only the second video data or both the first and second video data based on an input by the one or more passengers of the aircraft.

9. A computer program product comprising program code portions for carrying out one or more of the steps of claim 8 when the computer program product is executed on a computer system or one or more computing devices.

10. A computer readable recording medium storing a computer program product according to claim 9.

## Patentansprüche

1. Verarbeitungseinheit (100) zum Bereitstellen von räumlichen Videodaten an Bord eines Flugzeugs, wobei die Verarbeitungseinheit (100) Folgendes umfasst:
- ein Verarbeitungselement (104), das konfiguriert ist, wenigstens einen Teil erster Videodaten und zweiter Videodaten zu verarbeiten, um räumliche Videodaten zu bilden, wobei die ersten und die zweiten Videodaten Videobilder einer oder mehrerer Ansichten außerhalb des Flugzeugs repräsentieren; und
- ein Weiterleitungselement (106), das konfiguriert ist, die gebildeten räumlichen Videodaten zu einer oder mehreren Anzeigevorrichtungen (400), die an Bord des Flugzeugs vorgesehen sind, für eine Präsentation für Passagiere des Flugzeugs weiterzuleiten,
wobei die ersten Videodaten Videobilder repräsentieren, die durch eine einzelne äußere Videokamera (202; 302) für jede der einen oder der mehreren Ansichten erfasst wurden, und wobei die Verarbeitungseinheit (100) ferner ein Erzeugungselement (108) umfasst, das konfiguriert ist, die zweiten Videodaten aus den ersten Videodaten zu erzeugen,
**dadurch gekennzeichnet, dass** das Erzeugungselement (108) konfiguriert ist, die zweiten Videodaten durch Duplizieren der ersten Videodaten und durch Verzögern oder Zurückhalten der duplizierten ersten Videodaten mit einer vorkonfigurierten und/oder festgelegten Verzögerungszeit zu erzeugen, und wobei die Verarbeitungseinheit (100) konfiguriert ist, die Verzögerungszeit auf der Basis einer Verzögerungsinformation, die durch einen oder mehrere Passagiere des Flugzeugs eingegeben wird, und/oder einer Verzögerungsinformation, die durch das Flugpersonal eingegeben wird, festzulegen,
wobei das Weiterleitungselement (106) konfiguriert ist, die ersten und/oder die zweiten Videodaten an die eine oder die mehreren Anzeigevorrichtungen (400), die an Bord des Flugzeugs vorgesehen sind, für eine Präsentation für Passagiere des Flugzeugs weiterzuleiten, und
wobei das Weiterleitungselement (106) konfiguriert ist, auf der Basis eines Eingangssignals durch den einen oder mehrere Passagiere des Flugzeugs nur die ersten Videodaten oder nur die zweiten Videodaten oder sowohl die ersten als auch die zweiten Videodaten weiterzuleiten.

2. Verarbeitungseinheit (100) nach Anspruch 1, wobei das Verarbeitungselement (104) konfiguriert ist, wenigstens einen Teil der ersten Videodaten und der zweiten Videodaten durch Übereinanderlegen von Frames der ersten Videodaten und Frames der zweiten Videodaten zu kombinieren, wobei die übereinanderliegenden Frames der ersten und der zweiten Videodaten in Übereinstimmung mit der Verzögerungszeit versetzt sind.

3. Verarbeitungseinheit (100) nach Anspruch 1 oder 2, wobei die ersten und die zweiten Videodaten in einem Video-Feed oder einem Video-Stream strukturiert oder organisiert sind, und wobei die räumlichen Videodaten in einem räumlichen Video-Feed oder einem räumlichen Video-Stream strukturiert oder organisiert sind.

4. System (200; 500) zum Bereitstellen von räumlichen Videodaten an Bord eines Flugzeugs, wobei das System (200; 500) Folgendes umfasst:
- wenigstens eine Videokamera (202, 204; 302, 304), die konfiguriert ist, wenigstens erste Videodaten zu erzeugen, die Videobilder einer oder mehrerer Ansichten außerhalb des Flugzeugs repräsentieren; und
- die Verarbeitungseinheit (100) nach einem der Ansprüche 1 bis 3.

5. System (200; 500) nach Anspruch 4, wobei das System (200; 500) ferner eine oder mehrere Anzeigevorrichtungen (400) umfasst, die mit der Verarbeitungseinheit (100) über eine drahtgebundene und/oder eine drahtlose Verbindung gekoppelt sind, so dass die räumlichen Videodaten nach Bedarf abgerufen werden können, um auf wenigstens einer der einen oder der mehreren Anzeigevorrichtungen (400) räumliche Videobilder anzuzeigen, die durch die räumlichen Videodaten repräsentiert werden.

6. System (200; 500) nach Anspruch 4 oder 5, wobei das System ein In-flight-Entertainmentsystem (IFE-System) umfasst oder als solches konfiguriert ist.

7. Flugzeug, das das System (200; 500) nach einem der Ansprüche 4 bis 6 umfasst, wobei die wenigstens eine Videokamera (202, 204; 302, 304) an der Flugzeugstruktur als eine nach unten blickende Videokamera und/oder eine nach vorn blickende Videokamera angeordnet ist.

8. Verfahren zum Bereitstellen räumlicher Videodaten an Bord eines Flugzeugs, wobei das Verfahren die folgenden Schritte umfasst:
- Verarbeiten (S304; S606) wenigstens eines Teils erster Videodaten und zweiter Videodaten, um räumliche Videodaten zu bilden, wobei die ersten und die zweiten Videodaten Videobilder einer oder mehrerer Ansichten außerhalb des Flugzeugs repräsentieren; und
- Weiterleiten (S306; S608) der gebildeten räumlichen Videodaten an eine oder mehrere Anzeigevorrichtungen, die an Bord des Flugzeugs vorgesehen sind, zur Präsentation für Passagiere des Flugzeugs,
wobei die ersten Videodaten Videobilder repräsentieren, die durch eine einzelne äußere Videokamera (202; 302) für jede der einen oder der mehreren Ansichten erfasst wurden, und wobei das Verfahren ferner das Erzeugen der zweiten Videodaten aus den ersten Videodaten umfasst,
**gekennzeichnet durch** das Erzeugen der zweiten Videodaten durch Duplizieren der ersten Videodaten und durch Verzögern oder Zurückhalten der duplizierten ersten Videodaten mit einer vorkonfigurierten und/oder festgelegten Verzögerungszeit, und wobei das Verfahren das Festlegen der Verzögerungszeit auf der Basis einer Verzögerungsinformation, die durch einen oder mehrere Passagiere des Flugzeugs eingegeben wird, und/oder einer Verzögerungsinformation, die durch das Flugpersonal eingegeben wird, umfasst,
wobei das Weiterleiten (S306; S308) ferner das Weiterleiten der ersten und/oder der zweiten Videodaten an eine oder mehrere Anzeigevorrichtungen, die an Bord des Flugzeugs vorgesehen sind, für eine Präsentation für Passagiere des Flugzeugs umfasst, und
wobei das Weiterleiten (S306; S308) ferner das Weiterleiten nur der ersten Videodaten oder nur der zweiten Videodaten oder sowohl der ersten als auch der zweiten Videodaten auf der Basis eines Eingangssignals durch den einen oder mehrere Passagiere des Flugzeugs umfasst.

9. Computerprogrammprodukt, das Programmcodeabschnitte zum Ausführen eines oder mehrerer Schritte nach Anspruch 8 umfasst, wenn das Computerprogrammprodukt in einem Computersystem oder einer oder mehreren Computervorrichtungen ausgeführt wird.

10. Computerlesbares Speichermedium, das ein Computerprogrammprodukt nach Anspruch 9 speichert.

## Revendications

1. Unité de traitement (100) pour fournir des données vidéo stéréoscopiques à bord d'un avion, où l'unité de traitement (100) comprend :
- un composant de traitement (104) configuré pour traiter au moins une partie des premières données vidéo et des secondes données vidéo pour former des données vidéo stéréoscopiques, où les premières et les secondes données vidéo représentent des images vidéo d'une ou plusieurs vues externes à l'avion ; et
- un composant de transmission (106) configuré pour transmettre les données vidéo stéréoscopiques formées à un ou plusieurs dispositifs d'affichage (400) pourvus à bord de l'avion pour une présentation aux passagers de l'avion,
où les premières données vidéo représentent des images vidéo capturées par une seule caméra vidéo externe (202 ; 302) pour chacune des une ou plusieurs vues, et l'unité de traitement (100) comprend en outre un composant de génération (108) configuré pour générer les secondes données vidéo à partir des premières données vidéo,
**caractérisé en ce que** le composant de génération (108) est configuré pour générer les secondes données vidéo en dupliquant les premières données vidéo et en décalant ou en retardant les premières données vidéo dupliquées d'un temps de retard préconfiguré et/ou déterminé, et où l'unité de traitement (100) est configurée pour déterminer le temps de retard sur la base d'au moins une information parmi une information de retard entrée par un ou plusieurs passagers de l'avion et une information de retard entrée par le personnel de l'avion,
où le composant de transmission (106) est configuré pour transmettre au moins l'une des premières et secondes données vidéo vers les un ou plusieurs dispositifs d'affichage (400) pourvus à bord de l'avion pour une présentation aux passagers de l'avion, et
où le composant de transfert (106) est configuré pour transférer uniquement les premières données vidéo ou uniquement les secondes données vidéo ou à la fois les premières et les secondes données vidéo sur la base d'une entrée par les un ou plusieurs passagers de l'avion.

2. Unité de traitement (100) selon la revendication 1, dans laquelle le composant de traitement (104) est configuré pour combiner au moins une partie des premières données vidéo et des secondes données vidéo en superposant des trames des premières données vidéo avec des trames des secondes données vidéo, où les trames superposées des premières et des secondes données vidéo sont décalées selon le temps de retard.

3. Unité de traitement (100) selon la revendication 1 ou la revendication 2, dans laquelle les premières et les secondes données vidéo sont structurées ou organisées sous la forme d'une alimentation vidéo ou d'un flux vidéo, et les données vidéo stéréoscopiques sont structurées ou organisées sous la forme d'une alimentation vidéo stéréoscopique ou d'un flux vidéo stéréoscopique.

4. Système (200 ; 500) pour fournir des données vidéo stéréoscopiques à bord d'un avion, où le système (200 ; 500) comprend :
- au moins une caméra vidéo (202, 204 ; 302, 304) configurée pour générer au moins des premières données vidéo représentant des images vidéo d'une ou plusieurs vues externes à l'avion ; et
- l'unité de traitement (100) selon l'une quelconque des revendications 1 à 3.

5. Système (200 ; 500) selon la revendication 4, dans lequel le système (200 ; 500) comprend en outre un ou plusieurs dispositifs d'affichage (400) couplés à l'unité de traitement (100) par l'intermédiaire d'au moins une connexion parmi une connexion câblée et une connexion sans fil de sorte que les données vidéo stéréoscopiques sont récupérables à la demande pour afficher des images vidéo stéréoscopiques représentées par les données vidéo stéréoscopiques sur au moins l'un des un ou plusieurs dispositifs d'affichage (400).

6. Système (200 ; 500) selon la revendication 4 ou la revendication 5, dans lequel le système comprend ou est configuré comme un système de divertissement en vol, IFE.

7. Avion comprenant le système (200 ; 500) de l'une quelconque des revendications 4 à 6, dans lequel l'au moins une caméra vidéo (202, 204 ; 302, 304) est agencée sur la structure de l'avion sous la forme d'au moins une caméra vidéo orientée vers le bas et d'une caméra vidéo orientée vers l'avant.

8. Procédé pour fournir des données vidéo stéréoscopiques à bord d'un avion, où le procédé comprend les étapes suivantes :
- traiter (S304 ; S606) au moins une partie des premières données vidéo et des secondes données vidéo pour former des données vidéo stéréoscopiques, où les premières et les secondes données vidéo représentent des images vidéo d'une ou plusieurs vues externes à l'avion ; et
- transmettre (S306 ; S608) les données vidéo stéréoscopiques formées à un ou plusieurs dispositifs d'affichage pourvus à bord de l'avion une présentation aux passagers de l'avion,
où les premières données vidéo représentent des images vidéo capturées par une seule caméra vidéo externe (202 ; 302) pour chacune des une ou plusieurs vues, et le procédé comprend en outre de générer des secondes données vidéo à partir des premières données vidéo,
**caractérisé par** la génération des secondes données vidéo en dupliquant les premières données vidéo et en décalant ou en retardant les premières données vidéo dupliquées d'un temps de retard préconfiguré et/ou déterminé, et où le procédé comprend de déterminer le temps de retard sur la base d'au moins une information parmi une information de retard entrée par un ou plusieurs passagers de l'avion et une information de retard entrée par le personnel de l'avion,
où le transfert (S306 ; 5308) comprend en outre de transférer au moins l'une des premières et secondes données vidéo vers les un ou plusieurs dispositifs d'affichage pourvus à bord de l'avion pour une présentation aux passagers de l'avion, et
où le transfert (S306 ; S308) comprend en outre de transférer uniquement les premières données vidéo ou uniquement des secondes données vidéo ou à la fois les premières et les secondes données vidéo sur la base d'une entrée par les un ou plusieurs passagers de l'avion.

9. Produit programme informatique comprenant des parties de code de programme pour exécuter une ou plusieurs des étapes de la revendication 8 lorsque le produit programme informatique est exécuté sur un système informatique ou sur un ou plusieurs dispositifs informatiques.

10. Support d'enregistrement lisible par ordinateur stockant un produit programme informatique selon la revendication 9.
